# EUROPÄISCHE PATENTANMELDUNG

(11) **EP 4 446 959 A1**
(43) Veröffentlichungstag der Anmeldung: **16.10.2024**
(21) Anmeldenummer: 23167910.1
(22) Anmeldetag: 14.04.2023
(51) Int. Cl.: G06Q 10/063, G06Q 50/16, G06V 20/10

(54) **VERFAHREN ZUM KORRELIEREN EINES DIGITALEN PLANS MIT EINER TATSÄCHLICHEN UMGEBUNG**

(71) Anmelder: Robotic Eyes GmbH, 8010 Graz (AT)
(72) Erfinder: WALCHER, Wolfgang, 8010 Graz (AT); REITINGER, Bernhard, 8323 St. Marein (AU)
(74) Vertreter: Schwarz & Partner Patentanwälte GmbH

(57) **Zusammenfassung**

Die Erfindung betrifft ein Verfahren zum Korrelieren eines digitalen Plans (7) mit einer tatsächlichen Umgebung, wobei das Verfahren die folgenden Schritte umfasst: Empfangen oder Abrufen eines digitalen Plans (7), Bereitstellen eines mobilen Identifikationsmaßstabes (11), Platzieren des Identifikationsmaßstabes (11) an einer Orientierungsstelle (N0), Hinterlegen der Position der Orientierungsstelle (N0) und der Ausrichtung des Identifikationsmaßstabes (11) in der Recheneinheit (8), um eine Darstellung des Identifikationsmaßstabes (11) im Plan einzuzeichnen, Aufzeichnen zumindest eines Bildes (10), welches den Identifikationsmaßstab (11) enthält, Korrelieren des Planes (7) mit dem aufgezeichneten Bild (10).

## Beschreibung

Die Erfindung betrifft ein Verfahren zum Korrelieren eines digitalen Plans mit einer tatsächlichen Umgebung mittels einer Recheneinheit und einer an die Recheneinheit angeschlossenen Kamera.

Insbesondere in der Gebäudetechnik ist bekannt, zuerst einen Plan für ein Gebäude auf Papier zu bringen und danach das Gebäude gemäß diesem Plan zu konstruieren. Abschließend kann manuell - mit Fachwissen und Maßband - überprüft werden, ob das Gebäude dem Plan entspricht. Die vorliegende Erfindung betrifft eine Entwicklung im letztgenannten Aspekt, um die Kontrolle zu erleichtern, ob das hergestellte Gebäude plangemäß konstruiert wurde.

Bekannt ist, die Pläne in digitaler Form zu erstellen und auf einem Bildschirm anzuzeigen. So kann beispielsweise eine fachkundige Person den Plan z.B. auf einem Tablet anzeigen und das Gebäude begehen, wobei die fachkundige Person jeweils im Plan auf die momentan begangene Stelle des Gebäudes hineinzoomen kann, damit diese Stelle des Planes manuell mit dem jeweiligen Gebäudeteil abgeglichen werden kann. Die fachkundige Person zieht z.B. einen Maßstab heran, misst einen Abstand einer Steckdose zu einer Wand und vergleicht im Plan, ob der gemessene Abstand einem geplanten Abstand der Steckdose zur Wand entspricht.

Es ist ersichtlich, dass auch das Vorhandensein eines digitalen Planes ohne weitere Maßnahmen weiterhin viel manuelle Arbeit beim Verifizieren bzw. Herstellen der Gebäudestruktur benötigt.

Aus dem Stand der Technik ist weiters bekannt, Pläne in einem Realmaß darzustellen, siehe z.B. die WO 2022/128280 A1 und die US 10,210,607 B1. Vorrangig geht es in diesen Schriften jedoch um die Kalibration der Kameras bzw. Projektoren, insbesondere da üblicherweise statische Systeme eingesetzt werden, z.B. um Darstellungen von herzustellenden Bauteilen auf einen Montagetisch zu projizieren.

Die vorliegende Erfindung setzt sich jedoch zum Ziel, eine großräumige Struktur wie ein Gebäude mittels eines Planes punktuell oder auch im Gesamten zu verifizieren oder auch in diesem Plan dargestellte Informationen auf die tatsächliche Umgebung zu übertragen. Für dieses Ziel wären vorrangig statische Lösungen wie in den vorgenannten Schriften nicht vorteilhaft.

Es ist daher die Aufgabe der Erfindung, ein Verfahren zum Korrelieren eines digitalen Planes mit einer tatsächlichen Umgebung, wobei bei diesem Verfahren eine Recheneinheit und eine an die Recheneinheit angeschlossene Kamera eingesetzt werden. Das Verfahren umfasst die folgenden Schritte:
- mittels der Recheneinheit, Empfangen oder Abrufen eines digitalen Plans, wobei der digitale Plan eine Darstellung der Umgebung umfasst,
- Bereitstellen eines mobilen Identifikationsmaßstabes mit einer zweidimensionalen optischen Erscheinungsform einer vorbestimmten Größe, wobei die optische Erscheinungsform und die Größe in der Recheneinheit hinterlegt sind,
- Platzieren des Identifikationsmaßstabes an einer Orientierungsstelle mit einer ausgewählten Ausrichtung,
- Hinterlegen der Position der Orientierungsstelle und der Ausrichtung des Identifikationsmaßstabes an der Orientierungsstelle in der Recheneinheit, um eine Darstellung des Identifikationsmaßstabes (mittels der vorab hinterlegten Größe und Erscheinungsform des Identifikationsmaßstabes) im Plan einzuzeichnen,
- mittels der Kamera, Aufzeichnen zumindest eines Bildes, das zumindest einen Teil der Umgebung und den in der Umgebung befindlichen Identifikationsmaßstab enthält,
- mittels der Recheneinheit, Korrelieren des Planes mit dem aufgezeichneten Bild, indem die Darstellung des Identifikationsmaßstabes (bzw. die Darstellung der Erscheinungsform des Identifikationsmaßstabes) im Plan mit der im Bild ersichtlichen optischen Erscheinungsform des Identifikationsmaßstabs verknüpft wird. Durch die zweidimensionale Erscheinungsform kann die Korrelation eine punktuelle Verknüpfung des Planes am Bild an der Orientierungsstelle, eine Lageausrichtung des Planes am Bild (z.B. eine Drehung ausgehend von der Orientierungsstelle) und eine Skalierung des Planes bezüglich des Bildes durch die vorbekannte Größe des Identifikationsmaßstabes umfassen.

Das erfindungsgemäße Verfahren ermöglicht durch den Identifikationsmaßstab eine überaus rasche Möglichkeit, um den Plan mit Realmaßen auf das aufgenommene Bild zu übertragen. Dadurch wird ermöglicht, aus dem Plan auszulesen, wo sich z.B. eine zu verifizierende Struktur oder eine zu übertagende Information im Bild befinden soll. Der Identifikationsmaßstab ist dabei insbesondere mobil ausgestaltet und ist nicht ortsfest am Gebäude angebracht. Der Identifikationsmaßstab definiert Nullpunkt (Schnittpunkt von zwei Längsseiten) und die Richtung in zwei Koordinaten (zwei Längsseiten). Dadurch müssen keine weiteren Vorkehrungen getroffen werden und der Benutzer kann nach dem erstmaligen Betreten des Gebäudes bereits die dort vorgesehenen Strukturen verifizieren oder Informationen vom Plan auf die Umgebung übertragen.

Nach dem Platzieren des Identifikationsmaßstabs ist es unmittelbar möglich, eine interaktive Verortung von Plandaten zur automatischen Qualitätsüberprüfung durchzuführen. Es ist insbesondere nicht mehr notwendig, dass eine fachkundige Person die Umgebung manuell mittels eines Maßbandes vermisst.

Das erfindungsgemäße System ist insbesondere in Fabriken, Baustellen und sonstigen Arbeitsflächen einsetzbar, an denen Bauteile, Montageelemente oder sonstige Strukturen gemäß einem Plan hergestellt werden. Die Verifizierung bzw. Übertragung der Information kann in Sekundenschnelle durchgeführt und insbesondere auch digital festgehalten werden, damit auch zu einem späteren Zeitpunkt festgestellt werden kann, ob Strukturen plangemäß hergestellt wurden.

Es sei weiters festgehalten, dass es mit dem erfindungsgemäßen Verfahren nicht nur möglich ist, die korrekte Positionierung der Strukturen zu verifizieren oder anzuleiten, sondern auch, den Typ oder Hersteller der Strukturen zu verifizieren oder vorzugeben. Die Verifizierung ist insbesondere dann möglich, wenn im Plan auch der Typ oder Herstellers hinterlegt ist und bevorzugt aus dem aufgezeichneten Bild ersichtlich ist, ob die Struktur einem bestimmten Typ oder Hersteller entspricht, z.B. wenn diese eine visuell ersichtliche Identifikationsnummer aufweist oder mittels einer Bildanalyse feststellbar ist, von welchem Typ oder Hersteller die Struktur ist. Das Anleiten, nach welchem Typ oder Hersteller die Struktur hergestellt werden soll, ist insbesondere dann möglich, wenn im Plan auch der Typ oder Herstellers hinterlegt ist und beim Übertragen der Information auch der Typ oder der Hersteller angezeigt wird.

Es sei festgehalten, dass es sich bei dem erfindungsgemäßen Verfahren nicht nur um eine "punktuelle" Korrelation handelt, sondern um eine zweidimensionale Korrelation, um auch die Maße des Planes auf das Bild zu übertragen. Die Korrelation in zwei Dimensionen wird durch die zweidimensionale Erscheinungsform des Identifikationsmaßstabs und dessen vorbekannte Größe (da es sich um eine zweidimensionale Erscheinungsform handelt, ist die Größe flächig, d.h. in zumindest zwei nicht-parallel zueinander liegenden Richtungen, bekannt) ermöglicht. Der Plan wird daher einerseits an einem Punkt mit dem Bild verknüpft und es kann auch eine Skalierung in Bezug auf das Bild erfolgen.

In einer besonders bevorzugten Ausführungsform ist weist der Identifikationsmaßstab einen flächigen Körper mit zwei z.B. in einem rechten Winkel zueinanderstehenden Längsseiten einer vorbestimmten Länge auf (da der Recheneinheit die Größe des Identifikationsmaßstabs bekannt ist, sind ihr auch die Längen bekannt). Dies kann dazu eingesetzt werden, um die Längen beim Einzeichnen der Darstellung des Identifikationsmaßstabes im Plan ausgehend von der Orientierungsstelle als Referenzlängen einzuzeichnen, sodass beim Korrelieren des Planes mit dem Bild die im Bild ersichtlichen Längsseiten mit den im Plan dargestellten Referenzlängen überlagert werden können. Ein flächiger Körper mit zwei normal zueinanderstehenden Längsseiten ist insbesondere bei Gebäuden vorteilhaft, da der Identifikationsmaßstab einfach in Ecken eingelegt werden können. Für besondere Anwendungszwecke könnten die Längsseiten auch nicht-normal zueinanderstehen oder sogar gekrümmt sein, z.B. wenn Räume vermessen werden, deren Wände in einem Winkel von ungleich 90° zueinanderstehen.

In der letztgenannten Ausführungsform wird der Identifikationsmaßstab üblicherweise derart platziert, dass der Identifikationsmaßstab flächig an einen Untergrund gelegt wird und die beiden Längsseiten an zwei normal zueinanderstehenden Flächen angelegt werden, wobei der Untergrund und die Flächen im Plan dargestellt sind. Der Untergrund und die Flächen können jeweils Böden oder Wände sein. Der Schnittpunkt der Längsseiten wird üblicherweise an die Orientierungsstelle gelegt, wobei hiervon jedoch auch abgewichen werden kann, insbesondere wenn es zu einer Abdeckung kommt, z.B. durch eine Leiste.

Der Identifikationsmaßstab weist optional zumindest einen Identifikationsmarker auf, z.B. einen QR-Code, welcher der Oberfläche des Identifikationsmarkers eine vorbestimmte inhomogene Ausgestaltung verleiht. Die Identifikationsmarker sind aus mehreren Gründen vorteilhaft, da der Identifikationsmaßstab durch die Identifikationsmarker im Bild einfacher ersichtlich wird und zudem weitere Informationen aus der Anordnung der Identifikationsmarker gewonnen werden können, z.B. eine numerische Angabe des Abstands des Identifikationsmarkers zu einem Schnittpunkt der Längsseiten und damit zum Orientierungspunkt. Weiters können die Identifikationsmarker zur Ermittlung einer perspektivischen Verzerrung aus dem Bild herangezogen werden. Es sei hervorgehoben, dass der Identifikationsmaßstab auch einen einzigen Identifikationsmarker aufweisen könnte, der den Identifikationsmaßstab z.B. vollständig überdeckt. Weiters wird angemerkt, dass die äußere Form des Identifikationsmaßstabs auch von der Anordnung der Identifikationsmarker abweichen kann, z.B. könnte der Identifikationsmaßstab ein 8-Eck sein und die Identifikationsmarker aufweisen, die in L-Form angeordnet sind.

Die Identifikationsmarker sind insbesondere dann vorteilhaft, wenn der Identifikationsmaßstab teilweise verdeckt ist (hierunter wird auch verstanden, dass der Identifikationsmaßstab verdreckt ist oder teilweiße außerhalb des Bildes liegt), da die Recheneinheit das Abdecken der Identifikationsmarker erkennen kann. In anderen Worten kann die Recheneinheit die Ausgestaltung des Identifikationsmaßstabs aus dem Bild auslesen, diese mit einer vorab hinterlegten Ausgestaltung des Identifikationsmaßstabs vergleichen und eine neue Referenzlänge des Identifikationsmaßstabes errechnen, um diese beim Einzeichnen der Darstellung des Identifikationsmaßstabes im Plan heranzieht. Sollte der Identifikationsmaßstab daher teilweise verdeckt sein, kann die Recheneinheit diese Abdeckung vollautomatisch erkennen und ausgleichen. Dies wäre ohne Identifikationsmarker nicht möglich.

Im einfachsten Fall kann der Plan ein zweidimensionaler Plan sein, in welchem Fall die Korrelation mittels des Identifikationsmaßstabes in zwei Richtungen bereits ausreichend sein kann. In vielen Fällen ist der der Plan jedoch ein dreidimensionaler Plan. Sollte eine weitere Korrelation in der dritten Richtung (z-Richtung) gewünscht werden, kann man die Neigung der Kamera heranzeihen und diese z.B. mit der perspektivischen Verzerrung im Bild abgleichen. Im Allgemeinen kann die Kamera daher ihre Neigung, die sie zum Zeitpunkt der Aufzeichnung des Bildes aufweist, an die Recheneinheit senden, sodass die Recheneinheit die Neigung im Schritt des Korrelierens mitberücksichtigen kann.

Um der Recheneinheit mitzuteilen, an welcher Stelle sich der Identifikationsmaßstab befindet, kann die Recheneinheit eine Benutzerschnittstelle umfassen, über welche die Orientierungsstelle des Identifikationsmaßstabes manuell an die Recheneinheit eingebbar ist. Die Benutzerschnittstelle kann beispielsweise durch eine Maus und/oder eine Tastatur gebildet werden und der Benutzer könnte die Orientierungsstelle unmittelbar im Plan grafisch markieren.

Weiters bevorzugt kann die Kamera Mittel zur Bewegungsverfolgung, bevorzugt eine inertiale Messeinheit oder eine optische Auswerteeinheit, umfassen und nach dem Korrelieren des Planes mit dem Bild bewegt werden, wobei weitere Bilder, die nach dem erstgenannten Bild aufgenommen wurden, auch mit dem Plan korreliert werden, indem eine Koordinatentransformation auf den zuvor korrelierten Plan angewandt wird, wobei die Koordinatentransformation auf Basis der Bewegungswerte errechnet wird, die von den genannten Mitteln zur Bewegungsverfolgung geliefert werden. In anderen Worten wird der Identifikationsmaßstab nur zum Planregistrieren benötigt. Sobald diese Aufnahme analysiert ist, kann der Identifikationsmaßstab entfernt bzw. die Kamera derart bewegt werden, dass der Identifikationsmaßstab nicht mehr im Blickfeld der Kamera liegt. Solange man nun die Bewegung der Kamera z.B. eines Tablets nachverfolgt ("trackt"), kann man in der Umgebung beliebige weitere Aufnahmen zur Überprüfung oder Anleitung machen. Angemerkt sei, dass die ursprüngliche Korrelation des Planes mit dem Bild eine einfache (perspektivische) Transformation des Planes sein kann, um diesen auf das Bild zu legen. Die weitere Koordinatentransformation auf Grundlage der perspektivischen Änderung (die z.B. durch die Messdaten einer IMU bekannt ist), ist hierbei eine einfache mathematische Methode. Die Mittel zur Bewegungsverfolgung können insbesondere eine inertiale Messeinheit (IMU) sein, die Messdaten, d.h. Beschleunigungsmessdaten und Drehratenmessdaten, über die erfolgte Bewegung liefert. Die Mittel zur Bewegungsverfolgung könnten jedoch auch eine optische Auswerteeinheit sein, d.h. eine Auswerteeinheit, welche Bewegungsdaten wie eine perspektivische Änderung aus den Bildunterschieden errechnet. Derartige optische Verfahren sind an sich bekannt, z.B. unter dem Begriff "visual odometry".

Die genannte Korrelation kann entweder zur Verifizierung einer bereits hergestellten Struktur oder zur Anleitung, wo eine bzw. welche Struktur hergestellt werden soll, ausgeführt werden. Das Verifizieren und das Anleiten können sowohl in Position als auch in einer technischen Eigenschaft wie Typ, Hersteller oder weiterer Spezifikationen (wie einer Brandschutzklasse) der Struktur erfolgen. Es versteht sich dass im Plan die Position der Struktur hinterlegt ist, jedoch könnte zu dieser Struktur auch die genannte technische Eigenschaft hinterlegt sein. Beim Anleiten könnte somit ausgegeben werden, dass eine Struktur mit der Typennummer XY hergestellt werden soll. Das Verifizieren kann entsprechend erfolgen, wenn aus dem Bild die technische Eigenschaft ersichtlich ist, wenn z.B. an der Struktur ein QR-Code angebracht ist, der die technische Eigenschaft anzeigt.

In einem ersten Aspekt schafft die Erfindung somit ein Verfahren zum Verifizieren einer Struktur, insbesondere einer Gebäudestruktur oder Montagestruktur, wobei der Plan eine Darstellung der zu verifizierenden Struktur umfasst, wobei das aufgezeichnete Bild oder ein danach aufgezeichnetes, mit dem Plan korreliertes weiteres Bild die in der tatsächlichen Umgebung vorhandene zu verifizierende Struktur umfasst, wobei das Verfahren den folgenden zusätzlichen Schritt umfasst: Überprüfen, ob die zu verifizierende Struktur im Plan mit der zu verifizierenden Struktur im mit dem Plan korrelierten Bild übereinstimmt.

Für den Schritt der Überprüfung können verschiedene Varianten eingesetzt werden, wobei drei bevorzugte Ausführungsformen im Folgenden beschrieben werden. Zwar wird üblicherweise nur eine der Varianten eingesetzt, jedoch können auch zwei oder drei der Varianten gleichzeitig durchgeführt werden, um gegebenenfalls auftretende Nachteile einer der Varianten ausgleichen zu können und eine redundante Verifizierung durchzuführen.

In der ersten Ausführungsform ermittelt die Recheneinheit eine Ist-Position der zu verifizierenden Struktur aus dem Bild und vergleicht diese mit einer im Plan dargestellten Soll-Position der zu verifizierenden Struktur, wonach das Ergebnis des Vergleichs ausgegeben werden kann. Vorteil dieser Ausführungsform ist ein vollautomatischer Abgleich der Plandaten mit den Bilddaten, der keinen manuellen Arbeitsschritt benötigt. Dieses Verfahren ist lediglich dadurch begrenzt, ob die zu verifizierende Struktur gut genug aus dem Bild ersichtlich ist.

In der zweiten Variante der Überprüfung kann die Recheneinheit aus der Überlagerung des Planes mit dem Bild eine Projektionsdarstellung des Planes ermitteln und die Projektionsdarstellung mittels eines Projektors auf eine Soll-Position der zu verifizierenden Struktur projizieren. Im einfachsten Fall kann daraufhin manuell - aber weiterhin visuell und ohne weitere Hilfsmittel wie einen Maßstab - überprüft werden, ob die projizierte Struktur genau auf die tatsächlich vorhandene Struktur projiziert wird. Wenn dies der Fall ist, wurde die Struktur plangemäß hergestellt. Wenn nicht, können geeignete Maßnahmen getroffen werden. Hierbei handelt es sich um eine semi-automatisierte Verifizierung der Strukturen, bei der für den Benutzer besonders schnell ersichtlich ist, ob die Strukturen plangemäß gebaut wurden.

Bei der genannten zweiten Variante ist weiters bevorzugt, wenn die Kamera zumindest ein weiteres Bild aufnimmt, das die zu verifizierende Struktur und die darauf projizierte Projektionsdarstellung enthält. Im einfachsten Fall kann dies dazu dienen, für spätere Zwecke Beweismaterial zu schaffen, dass die tatsächlich vorhandenen Strukturen den plangemäßen, projizierten Strukturen entsprechen. Alternativ könnte dieses Bild auch für eine Verifizierung von einem Remote-Arbeitsplatz ermöglichen.

Weiters kann das neu aufgenommene Bild mit tatsächlich vorhandener Struktur und projizierter Struktur aber auch dazu eingesetzt werden, um eine vollautomatisierte Auswertung zu ermöglichen, z.B. indem die Recheneinheit eine aus dem weiteren Bild ersichtliche Ist-Position der zu verifizierenden Struktur mit einer aus dem weiteren Bild ersichtliche Soll-Position der Projektionsdarstellung der zu verifizierenden Struktur vergleicht, und ein Ergebnis des Vergleichs ausgibt. Wie bei der erstgenannten Variante ist hierzu überhaupt kein menschlicher Input zur Verifizierung notwendig, und es kann auch eine zuverlässigere Verifizierung stattfinden als bei der erstgenannten Variante, da die Bildauswertung einfacher ist. Nachteilig ist jedoch der größere Rechenaufwand zur Erstellung der Projektionsdarstellung und gegebenenfalls auftretende Kalibrierungsfehler.

In der dritten Variante können der Plan und das Bild gleichzeitig und überlagert auf einem Bildschirm dargestellt werden. Hierbei ist für den Benutzer auf dem Bildschirm ersichtlich, ob die Ist-Position der hergestellten Struktur der Soll-Position aus dem Plan entspricht. Insbesondere bietet sich hierbei an, ein Video von Bildern anzuzeigen, wobei jedes Bild mit dem Plan überlagert wird. Für jedes der Bilder wird eine eigene Korrelation durchgeführt. In dieser Variante bietet sich überdies an, dass der Plan oder Teile des Plans als Augmented-Reality-Darstellung dargestellt werden. Dadurch ist für den Benutzer schneller ersichtlich, ob die AR-Darstellung die Struktur im Bild überlagert.

In allen vorgenannten Ausführungsformen ist die Kamera üblicherweise ortsfest vorgesehen, was insbesondere dann vorteilhaft ist, wenn das Gebäude mit den zu verifizierenden Strukturen die Kameras bereits aufweist. Es kann jedoch auch vorgesehen werden, dass die Kamera und bevorzugt auch die Recheneinheit als mobiler, d.h. tragbarer, Computer ausgeführt werden. Auch der vorgenannte Bildschirm kann in der tragbaren Einheit verwirklicht werden. Dies hat den Vorteil, dass der Benutzer den tragbaren Computer, z.B. ein Tablet, zusammen mit dem Identifikationsmaßstab ohne weitere Vorkehrungen in ein och nie zuvor betretenes Gebäude verbringen kann und sofort mit der Verifizierung der in diesem Gebäude vorhandenen Strukturen beginnen kann, sofern der Benutzer über den Plan verfügt.

Üblicherweise befinden sich mehrere zu verifizierende Strukturen innerhalb des Gebäudes bzw. innerhalb des Plans, wobei jedoch nicht alle zu verifizierenden Strukturen im Blickfeld einer einzigen Kamera liegen. In diesem Fall kann das erfindungsgemäße Verfahren aufgrund der Mobilität des Identifikationsmaßstabes jedoch weiterhin durchgeführt werden, da dieser einfach in den Bereich einer nächsten zu verifizierenden Struktur gebracht werden kann. Konkret können zum Verifizieren einer zweiten Struktur die Schritte Platzieren, Übermitteln, Aufzeichnen, Korrelieren und Überprüfen wiederholt werden, wobei der Identifikationsmaßstab beim Schritt des Platzierens neu ausgerichtet und/oder an eine zweite Orientierungsstelle gelegt wird, die von der erstgenannten Orientierungsstelle abweicht. Dieses Verfahren kann wiederholt werden, indem man den Orientierungsmaßstab beliebig oft neu platziert um in dieser Weise alle Strukturen zu verifizieren.

In der letztgenannten Ausführungsform sind die zweite Struktur und die zweite Orientierungsstelle im ersten aufgezeichneten Bild üblicherweise nicht ersichtlich. Um dies zu lösen wir entweder eine andere ortsfeste Kamera herangezogen oder es wird eine mobile Kamera eingesetzt, welche für die Wiederholung der Schritte derart bewegt wird, dass der an der zweiten Orientierungsstelle befindliche Identifikationsmaßstab in den bei der Wiederholung aufgezeichneten Bildern ersichtlich ist.

In einem zweiten Aspekt schafft die Erfindung ein Verfahren, um einen Benutzer anzuleiten, wo eine Struktur hergestellt werden soll, d.h. ein Verfahren zum Übertagen einer Information auf die Umgebung, insbesondere einer Werkzeugposition oder Montageposition, wobei der Plan eine Darstellung der zu übertragenden Information umfasst, wobei das aufgezeichnete Bild oder ein danach aufgezeichnetes, mit dem Plan korreliertes weiteres Bild einen erwarteten Bereich der zu übertragenden Information umfasst, wobei das Verfahren den folgenden zusätzlichen Schritt umfasst: Übertragen der im Plan dargestellten Information auf die tatsächliche Umgebung gemäß des mit dem Plan korrelierten Bilds. Diesem Schritt kann ein weiterer, manuell oder automatisiert durchgeführter Schritt nachfolgen: Herstellen einer Struktur auf Basis der auf die Umgebung übertragenen Informationen, z.B. mittels Ansetzens eines Werkzeuges auf die übertragene Werkzeugposition.

In der vorgenannten Variante kann die Recheneinheit aus der Korrelation des Planes mit dem Bild eine Projektionsdarstellung zumindest eines Teils des Planes, insbesondere der zu übertragenden Information, ermitteln und die Projektionsdarstellung mittels eines Projektors auf die tatsächliche Umgebung projizieren. Dadurch kann z.B. eine Form auf die Umgebung projiziert werden, die ausgefräst oder ausgeschnitten werden soll, oder es können im Untergrund vorhandene Leitungen wie Gasleitungen auf die Umgebung projiziert werden, damit der Benutzer weiß, wo keine Bohrungen durchgeführt werden dürfen.

Alternativ oder zusätzlich zur vorgenannten Variante können der Plan und das Bild gleichzeitig und überlagert auf einem Bildschirm dargestellt werden, und der Plan oder Teile des Plans können bevorzug als Augmented-Reality-Darstellung dargestellt werden. Wie in der vorgenannten Variante weiß der Benutzer nun, wo die Struktur hergestellt werden soll oder wo nicht gearbeitet werden soll. Auf Grundlage der Anzeige auf dem Bildschirm kann der Benutzer nun z.B. händisch eine Montageposition an der tatsächlichen Umgebung einzeichnen bzw. das Werkzeug unmittelbar ansetzen.

Bevorzugte Ausführungsformen des in den angehängten Ansprüchen beanspruchten Werkzeugkarabiners werden nun im Folgenden anhand der Figuren näher erläutert.
Figur 1 zeigt eine zu überprüfende Gebäudestruktur und die für die Verifizierung eingesetzten Elemente in einer schematischen Perspektivansicht.
Figur 2 zeigt ein schematisches Sequenzdiagramm des erfindungsgemäßen Verfahrens.
Die Figuren 3, 4 und 5 zeigen jeweils eine Variante des Schrittes des Überprüfens des erfindungsgemäßen Verfahrens.
Die Figur 6 zeigt eine Variante der Anordnung von Figur 1, bei dem die Recheneinheit, Kamera und der Bildschirm in einem mobilen Computer verwirklicht sind.
Die Figur 7 zeigt eine erste Variante des erfindungsgemäßen Verfahrens, um mit einer ortsfesten Anordnung von Kameras mehrere Strukturen zu verifizieren.
Die Figur 8 zeigt eine zweite Variante des erfindungsgemäßen Verfahrens, um mit einer mobilen Kamera mehrere Strukturen zu verifizieren.
Figur 9 zeigt einen bei dem erfindungsgemäßen Verfahren eingesetzten Identifikationsmaßstab.
Die Figuren 10 und 11 zeigen einen besonderen Anwendungsfall, bei dem der Identifikationsmaßstab unter eine Leiste geschoben wird, wobei Figur 10 eine schematische Seitenansicht und Figur 11 eine schematische Draufsicht zeigt.

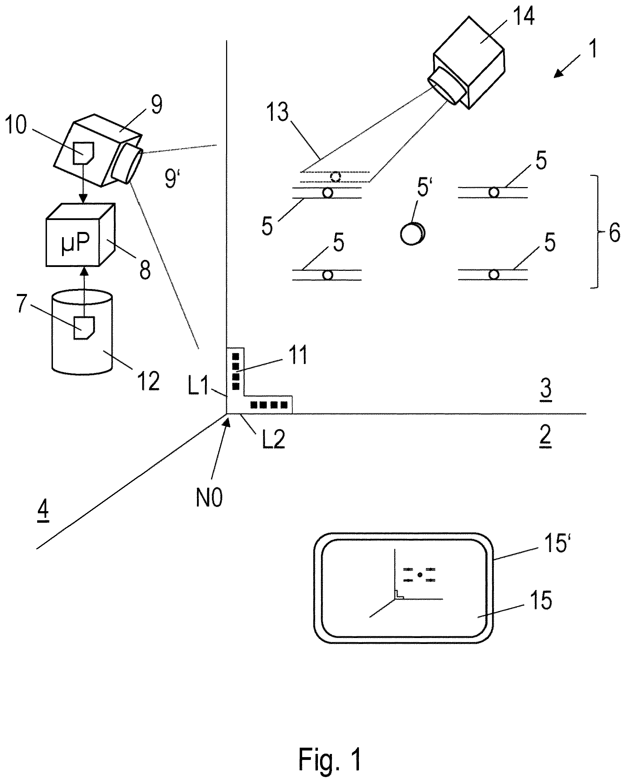

Figur 1 zeigt einen Teil eines Gebäudes 1 mit einem Boden 2 und zwei Wänden 3, 4, die jeweils in einem rechten Winkel zueinanderstehen. Das Gebäude bzw. der Boden 2 und die Wände 3, 4 bilden hier eine "Umgebung". Beispielhaft sind vier Flachstahlanker 5 und eine Steckdose 5' dargestellt, die an bzw. in der Wand 3 montiert sind. Da diese Elemente unmittelbar am Gebäude 1 montiert sind, wird hierin auch von Gebäudestrukturen gesprochen.

Das Gebäude 1 befindet sich inmitten der Konstruktion und soll in diesem Stadium (oder auch nachdem die Bauarbeiten abgeschlossen sind) überprüft werden, d.h. es soll verifiziert werden, ob sich Gebäudestrukturen wie der Flachstahlanker 5 und die Steckdose 5' an einer korrekten Position befinden. Unter der korrekten Position wird hierin verstanden, dass sie sich an einer Stelle befinden, die für die Flachstahlanker 5 und die Steckdose 5' in einem Plan 7 eingezeichnet ist. Weiters könnte überprüft werden, ob die Gebäudestrukturen von einem bestimmten Hersteller oder Typ sind, in welchem Fall auch der Hersteller oder Typ im Plan 7 hinterlegt sein könnte.

Im Allgemeinen muss das erfindungsgemäße Verfahren jedoch nicht in einem Gebäude 1 mit Boden 2 und Wänden 3, 4 eingesetzt werden, sondern es könnten auch andere hergestellte Strukturen 6 überprüft werden, z.B. ein Leitungssystem vor einem Gebäude. Es können daher nicht nur Gebäudestrukturen überprüft werden, sondern auch andere Strukturen 6 wie allgemeinere Montagestrukturen, i.e. andere Strukturen 6, die auf Grundlage eines Planes 7 erstellt wurden.

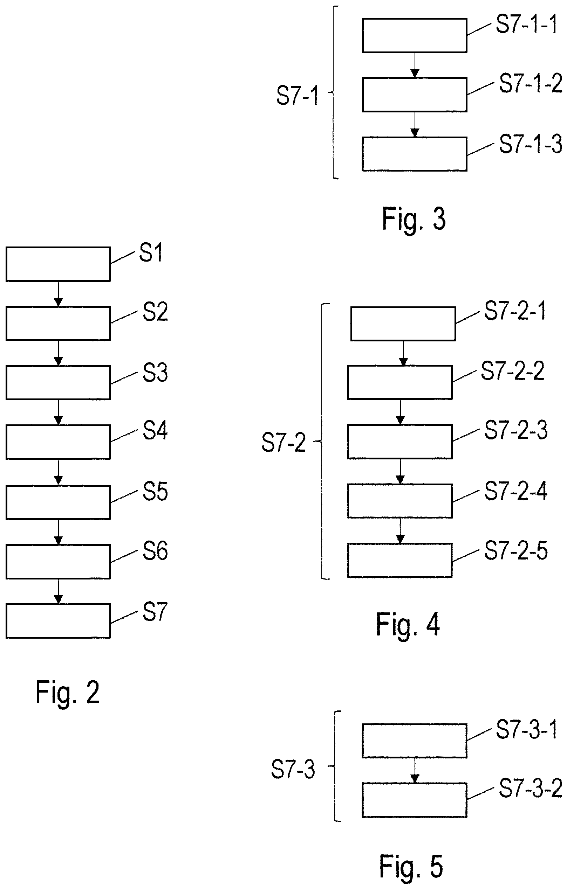

Der Plan 7, der zur Überprüfung der Strukturen 6 eingesetzt wird, ist ein digitaler Plan 7, der in einer Recheneinheit 8 oder einer mit der Recheneinheit 8 verbundenen Datenbank 12 hinterlegt ist, sodass dieser abgerufen werden kann. Der Plan 7 kann auch von einem Benutzer oder einer weiteren Recheneinheit an die genannte Recheneinheit 8 gesandt werden, sodass der Plan 7 von der Recheneinheit 8 empfangen werden kann. Das Verfahren zur Verifizierung der Strukturen 6 beginnt somit üblicherweise damit, dass die Recheneinheit 8 den Plan 7 in einem ersten Schritt S1 (Figur 2) abruft oder empfängt.

Der Plan 7 ist üblicherweise ein dreidimensionaler Plan und bildet z.B. das Gebäude 1 oder einen Teil des Gebäudes 1 wie ein Stockwerk oder einen Raum ab. Der Plan 7 könnte aber auch ein zweidimensionaler Plan oder eine Sammlung von zweidimensionalen Plänen sein (z.B., wenn für jede der normal zueinanderstehenden Flächen 2, 3, 4 ein zweidimensionaler Plan vorgesehen ist). Der Plan 7 ist in der Regel in Realmaßen verfasst, d.h. das Gebäude 1 bzw. der Abschnitt, in dem sich die zu verifizierenden Strukturen 6 befinden, ist in Realmaßen verfasst.

Im Plan 7 sind Darstellungen der zu verifizierenden Strukturen 6 dargestellt. Es wird im Folgenden somit davon gesprochen, dass Darstellungen oder Abbildungen der zu verifizierenden Strukturen im Plan 7 dargestellt sind. Es handelt sich hierbei um Sollwerte der Strukturen 6, sodass erwartet wird, dass sich die Strukturen 6 im Gebäude 1 an jenen Stellen befinden, die für die jeweiligen Darstellungen der Strukturen 6 im Plan 7 hinterlegt sind. Bei den tatsächlichen Positionen der Gebäudestrukturen handelt es sich um Istwerte.

Mit dem im Folgenden beschriebenen Verfahren soll eine Verifizierung ermöglicht werden, ob die Istwerte mit den Sollwerten übereinstimmen, d.h. ob die tatsächliche Position der zu verifizierenden Strukturen 6 im Gebäude 1 mit den im Plan 7 dargestellten Daten übereinstimmt.

Zu diesem Zweck wird weiters eine Kamera 9 eingesetzt, die mit der Recheneinheit 8 verbunden ist. Die Kamera 9 weist ein Blickfeld 9` auf, in welchem sich die zu verifizierenden Strukturen 6 befindet. D.h. im Falle von Figur 1 befindet sich die Gesamtheit bestehend aus vier Flachstahlankern 5 und der Steckdose 5' im Blickfeld 9` der Kamera 9. Die Kamera 9 kann somit ein Bild 10 aufzeichnen (das auch Teil eines Videos sein kann), in welchem die zu verifizierende Struktur 6 abgebildet ist.

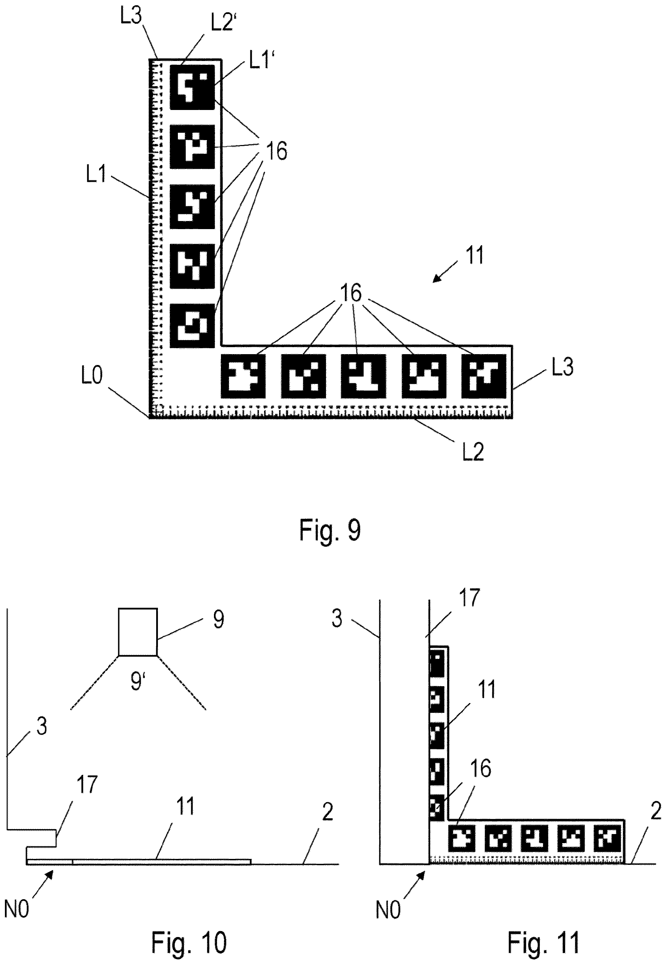

Um den Plan 7 mit dem Bild 10 zu korrelieren, wird in einem Schritt S2 ein mobiler Identifikationsmaßstab 11 mit einer vorbestimmten Erscheinungsform bereitgestellt. Eine bevorzugte Variante des Identifikationsmaßstabs 11 ist in Figur 9 dargestellt, auf die weiter unten im Detail eingegangen wird. Die Erscheinungsform des Identifikationsmaßstabes 11 soll vorbekannt sein, einerseits damit der Identifikationsmaßstab 11 leicht im später aufgezeichneten Bild 10 aufgefunden werden kann und andererseits, um den Identifikationsmaßstab 11 im Plan 7 darzustellen.

Zur Korrelation von Plan 7 und Bild 10 wird der Identifikationsmaßstab 11 im Gebäude 1 im Schritt S3 an einer sogenannten Orientierungsstelle N0 platziert, die auch als Nullpunkt bezeichnet werden kann. Die Orientierungsstelle N0 ist im Plan 7 wohldefiniert und soll auch im Blickfeld 9` der Kamera 9 liegen, sodass später auch der Identifikationsmaßstab 11 im Bild 10 ersichtlich ist.

Im Allgemeinen kann die Orientierungsstelle N0 beliebig gewählt werden, jedoch ist bevorzugt, wenn der Identifikationsmaßstab 11 eindeutig an der Orientierungsstelle N0 ausgerichtet werden kann. Im Beispiel von Figur 1 ist die Orientierungsstelle N0 die linke untere Ecke des dargestellten Teils des Gebäudes 1. Da diese linke untere Ecke auch im Plan 7 als solche identifizierbar ist, kann eine Verknüpfung, d.h. Korrelation, zwischen Plan 7 und Bild 10 erstellt werden. Generell ist bevorzugt, wenn die Orientierungsstelle N0 ein Schnittpunkt von drei normal zueinanderstehenden Elementen ist. Hierbei muss es sich nicht um Wände handelt, sondern die Orientierungsstelle N0 könnte auch an Trägern, Schalungswänden oder dergleichen gewählt werden.

Um die Korrelation zwischen Plan 7 und Bild 10 zu erstellen, wird der Recheneinheit 8 noch im Schritt S4 bekanntgegeben, an welcher Orientierungsstelle N0 sich der Identifikationsmaßstab 11 befindet bzw. befinden wird. In der Praxis kann der Benutzer z.B. eingangs den Identifikationsmaßstab 11 in die linke untere Ecke legen und danach der Recheneinheit 8 über eine Benutzerschnittstelle mitteilen, wo die Orientierungsstelle N0 liegt. Dies kann beispielsweise erfolgen, indem dem Benutzer der Plan 7 auf einem Bildschirm angezeigt wird, und der Benutzer wählt mit der Maus die Orientierungsstelle N0 im Plan 7 aus, hier z.B. die linke untere Ecke. Wenn die Ecke im Plan 7 eine eindeutige Identifikationsnummer hat und diese dem Benutzer bekannt ist, könnte der Benutzer auch diese Identifikationsnummer mittels einer Tastatur in die Recheneinheit 8 eingeben. In wieder anderen Varianten könnte die Recheneinheit 8 eine Anweisung an den Benutzer ausgeben, damit dieser den Identifikationsmaßstab 11 an eine vorbestimmte Orientierungsstelle N0 legen soll. Hierbei könnte die Anweisung beispielsweise lauten: "Legen Sie den Identifikationsmaßstab in die linke untere Ecke der hinteren Wand von Raum XY".

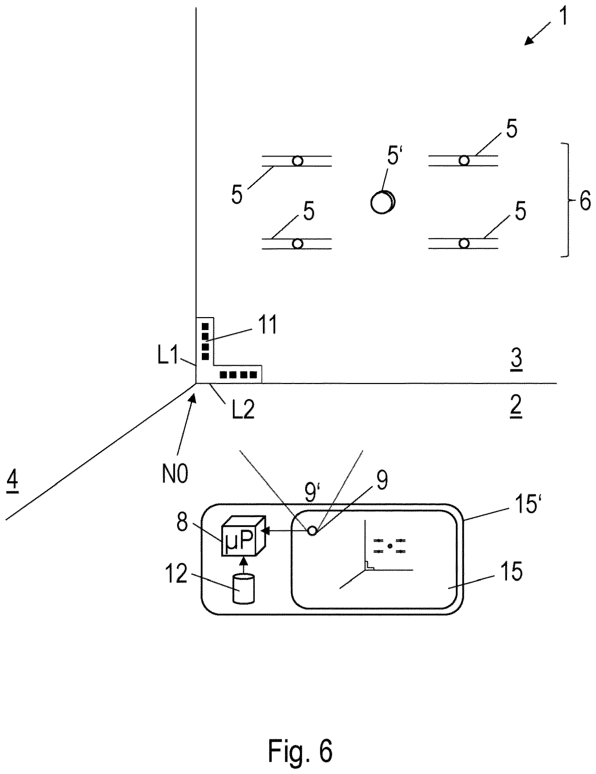

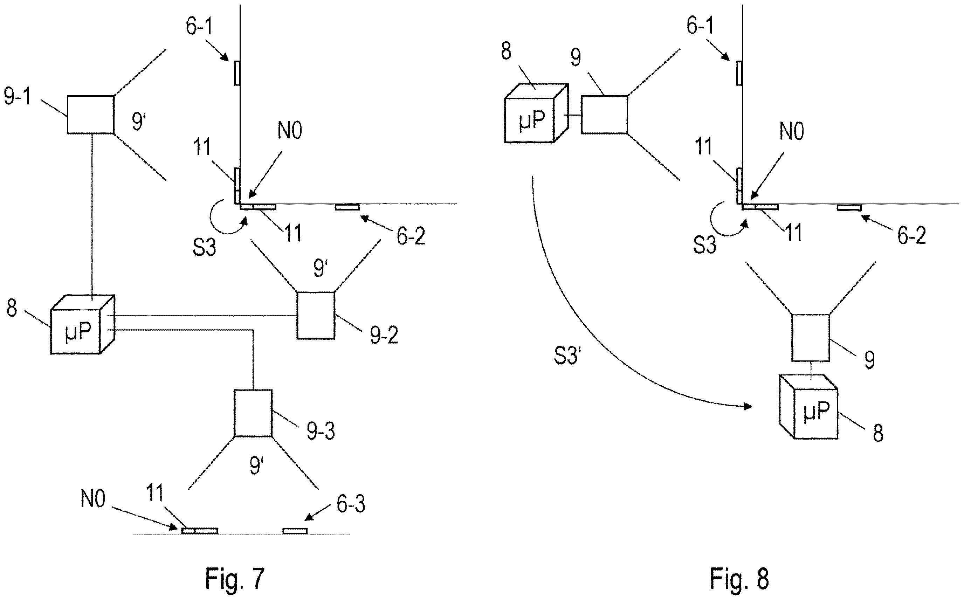

Weiters wird der Recheneinheit 8 auch bekanntgegeben, wie der Identifikationsmaßstab 11 an der Orientierungsstelle N0 ausgerichtet ist. Hierunter wird die Lage des Identifikationsmaßstabes 11 an der Orientierungsstelle N0 verstanden. Im Beispiel von Figur 1 ist ersichtlich, dass der Identifikationsmaßstab 11 flächig an der Wand 3 anliegt, dessen erste Längsseite L1 parallel zur Wand 4 verläuft und dessen zweite Längsseite L2 parallel zum Boden 2 verläuft. Aus den Figuren 6 und 7 ist auch ersichtlich, dass sich der Identifikationsmaßstab 11 nach dem Platzieren an derselben Orientierungsstelle N0 mit unterschiedlichen Ausrichtungen befinden könnte, um unterschiedliche Strukturen 6-1, 6-2 zu verifizieren.

Wie bereits zuvor erwähnt ist die Erscheinungsform des Identifikationsmaßstabs 11 vorbekannt, d.h. dessen Größe und Form ist vorbekannt. Da der Plan 7 in Realmaßen verfasst ist und die Orientierungsstelle N0 und die Größe, Form und Ausrichtung des Identifikationsmaßstabs 11 bekannt sind, kann eine Darstellung des Identifikationsmaßstabs 11 im Plan 7 eingezeichnet werden. Unter "eingezeichnet" wird hierin verstanden, dass der Identifikationsmaßstab 11 graphisch dargestellt oder auch nur numerisch als Datensatz im Plan 7 hinterlegt wird.

Sobald der Identifikationsmaßstab 11 an der Orientierungsstelle N0 positioniert wurde, kann die Kamera 9 im Schritt S5 ein Bild 10 aufzeichnen, das die zu verifizierende Struktur 6 und den Identifikationsmaßstab 11 enthält. Wie zuvor erwähnt könnte das Bild 10 auch Teil eines Videos sein.

Nachdem einerseits in der Recheneinheit 8 der Plan 7 mit dem darin dargestellten Identifikationsmaßstab 11 zur Verfügung steht und andererseits das Bild 10 von der Kamera 9 an die Recheneinheit 8 gesandt wurde, kann im Schritt S6 der Plan 7 mit dem Bild 10 korreliert werden. Im einfachsten Fall wird hierzu der Plan 7 derart perspektivisch angepasst, dass der Plan 7 über das Bild 10 gelegt werden kann, wobei der Identifikationsmaßstab 11 im Bild 10 in Position, Form und Größe vom Identifikationsmaßstab 11 im Plan 7 deckend überlagert wird. Im Allgemeinen wird davon gesprochen, dass die Darstellung des Identifikationsmaßstabes 11 im Plan 7 mit dem im Bild 10 ersichtlichen Identifikationsmaßstab 11 verknüpft wird, was auch numerisch erfolgen kann.

Nachdem der Plan 7 in der genannten Weise über den Identifikationsmaßstab 11 mit dem Bild 10 verknüpft wurde, ist im Schritt S7 die Überprüfung möglich, ob die zu verifizierende Struktur 6 im Plan 7 mit der zu verifizierenden Struktur 6 im mit dem Plan 7 korrelierten Bild 10 übereinstimmt. Wenn dies der Fall ist, entspricht der Istwert dem Sollwert und die tatsächlich gebaute Struktur 6 liegt an jener Stelle, an dem sie gemäß dem Plan 7 vorliegen soll. Weicht die Position der Struktur 6 im Bild 10 jedoch von der Position im Plan 7 ab, liegt eine Fehlkonstruktion vor, die beispielsweise korrigiert oder aus Kompatibilitätsgründen mit nachgelagerten Arbeiten im Plan 7 oder an einer anderen Stelle vermerkt werden kann.

Der Schritt S7 des Überprüfens kann auf mehrere Arten durchgeführt werden, die im Wesentlichen in drei Varianten S7-1, S7-2, S7-3 unterteilt werden können. Die drei Varianten sind in den Figuren 3, 4 und 5 gesondert dargestellt. In der ersten Variante S7-1 von Figur 3 wird das Bild 10 eingangs im Schritt 7-1-1 mittels einer Bildverarbeitung analysiert, um Daten abzulesen, an welcher Stelle (Istwert) sich die zu verifizierende Struktur 6 befindet, gegebenenfalls in Relation zur Orientierungsstelle N0. Die Recheneinheit 8 kann danach im Schritt 7-1-2 einen Abgleich durchführen, ob die aus dem Bild 10 ermittelte Position und gegebenenfalls Lage der zu verifizierenden Struktur 6 (d.h. der Istwert der Struktur 6) mit der aus dem Plan 7 ausgelesenen Position und gegebenenfalls Lage (d.h. mit dem Sollwert der Struktur 6) übereinstimmt. Das Ergebnis kann von der Recheneinheit 8 im Schritt S7-1-3 ausgebgeben werden, z.B. als Datei oder unmittelbar an einem Bildschirm.

In einer zweiten Variante S7-2 des Überprüfens von Figur 4 ermittelt die Recheneinheit 8 im Schritt S7-2-1 auf Basis der erfolgten Korrelation des Planes 7 mit dem Bild 10 eine Projektionsdarstellung 13 des Planes 7. Dadurch kann die Projektionsdarstellung 13 im Schritt S7-2-2 mittels eines Projektors 14 unmittelbar auf jenen Ort projiziert werden, an dem die zu verifizierende Struktur 6 gemäß den Plandaten vorliegen soll. Wenn die projizierte Struktur mit der tatsächlichen Struktur 6 zusammenfällt, kann der Benutzer manuell verifizieren, dass die Struktur 6 plangemäß verwirklicht wurde. Wenn jedoch, wie in Figur 1 dargestellt ist, ein räumlicher Versatz zwischen der projizierten Struktur und der tatsächlichen Struktur 6 vorliegt, ist für den Benutzer ersichtlich, dass sich die zu verifizierende Struktur an einer falschen Position befindet. Es könnte aber auch eine technische Eigenschaft wie eine Typennummer aus dem Bild ausgelesen werden und so zumindest verifiziert werden, dass die falsch positionierte Struktur eine korrekte Typennummer aufweist, die auch im Plan hinterlegt ist.

Im einfachsten Fall fallen die Kamera 9 und der Projektor 14 zusammen, wodurch sich die Projektionsdarstellung 13 für die Recheneinheit 8 besonders einfach ermitteln lässt, da der Plan 7 lediglich in derselben perspektivischen Ansicht wie das Bild 10 verzerrt werden muss. Wenn der Projektor 14 jedoch von der Kamera 9 beabstandet ist, wie in Figur 1 schematisch dargestellt ist, wird üblicherweise auch die Position des Projektors 14 an die Recheneinheit 8 übertragen, z.B. als Relativposition gegenüber der Kamera 9, sodass die Recheneinheit 8 eine optimierte Projektionsdarstellung 13 ermitteln kann. Beispielsweise können in der Recheneinheit 8 und/oder im Plan 7 auch die Position der Kamera 9 und/oder des Projektors 14 hinterlegt sein, z.B. wenn diese statisch im Gebäude angeordnet sind oder wenn diese Geräte aktuelle Positionsdaten wie GPS-Daten an die Recheneinheit 8 übermitteln.

In der vorgenannten zweiten Variante S7-2 kann die Kamera 9 im Schritt S7-2-3 auch ein weiteres Bild aufnehmen, während der Projektor 14 die Projektionsdarstellung projiziert. Dadurch wird eine Remote-Verifizierung durch einen entfernten Benutzer mit einem Bildschirm 15 ermöglicht. Alternativ oder zusätzlich kann im Schritt S7-2-4 eine Bildverarbeitung am weiteren Bild vorgenommen werden, um zu bestimmen, ob die Projektionsdarstellung mit der tatsächlichen Struktur übereinstimmt oder nicht. In anderen Worten kann die Recheneinheit 8 eine aus dem weiteren Bild ersichtliche Ist-Position einer zu überprüfenden Struktur 6 mit einer aus dem weiteren Bild ersichtlichen Soll-Position der Projektionsdarstellung 13 der zu überprüfenden Struktur 6 vergleichen. Das Ergebnis des Vergleichs kann wie oben hinsichtlich der ersten Variante im Schritt S7-2-5 erläutert ausgegeben werden.

In der Praxis kann für den Schritt S7-2-4 beispielsweise ein Differenzbild des erstgenannten Bildes 10 mit dem weiteren Bild erstellt werden. Wenn keine oder nur geringe Differenzen vorliegen, wurde die zu verifizierende Struktur 6 korrekt gebaut.

In einer dritten Variante S7-3 der Überprüfung von Figur 5 wird dem Benutzer ein Bildschirm 15 zur Verfügung gestellt. Die Recheneinheit 8 führt im Schritt S7-3-1 eine optische Überlagerung des Plans 7 mit dem Bild 10 durch, was durch die Korrelation mittels des Identifikationsmaßstabes 11 ermöglicht wurde. Die Recheneinheit 8 sendet diese optische Überlagerung an den Bildschirm 15, die dort im Schritt S7-3-2 angezeigt wird, sodass der Benutzer erkennen kann, ob sich die Struktur 6 am plangemäßen Ort befindet, d.h. der Benutzer kann erkennen, ob die Istwerte mit den Sollwerten übereinstimmen.

Wie aus Figur 1 ersichtlich ist, kann der Bildschirm 15 von der Recheneinheit 8 getrennt sein, sodass auch eine Übertragung der optischen Überlagerung über das Internet oder ein anderes Netzwerk an einen entfernten Benutzer möglich ist, um eine Remote-Verifizierung durchzuführen. Hierbei würde der Identifikationsmaßstab 11 von einer Hilfskraft an die Orientierungsstelle N0 gelegt und an dieser ausgerichtet werden. Der Bildschirm 15 kann aber auch in einem mobilen Computer 15' wie einem Tablet, Laptop oder Mobiltelefon verwirklicht sein, sodass der Benutzer das Gebäude begehen kann, den Identifikationsmaßstab 11 an verschiedene Orientierungsstellen N0 legen kann und unterschiedliche Strukturen 6 verifizieren kann.

Wie in Figur 6 dargestellt ist, könnte jedoch auch vorgesehen werden, dass die Kamera 9, die Recheneinheit 8 und der Bildschirm 15 in einem einzigen mobilen Computer 15' zusammengefasst sind, z.B. in einem Tablet. Auf diese Variante wird unten in Bezug auf Figur 8 näher eingegangen.

Zurückkommend auf Figur 2 sei festgehalten, dass eine sequenzielle Abarbeitung der Schritte S1-S7 wie dargestellt bevorzugt, aber nicht zwingend ist. Insbesondere könnte z.B. auch der Schritt S1 des Empfangens oder Abrufens des Planes 7 während oder nach den schritten S2 und/oder S3 stattfinden. Der Schritt S4, bei dem die Position und Ausrichtung des Identifikationsmaßstabs 11 in der Recheneinheit 8 hinterlegt wird, könnte auch bereits erfolgen, bevor der Identifikationsmaßstab 11 im Schritt S3 tatsächlich platziert wurde.

Auf das Überprüfen von unterschiedlichen Strukturen 6, die nicht von einer einzigen statischen Kamera 9 gleichzeitig erfasst werden können, wird im Folgenden mit Verweis auf die Figuren 7 und 8 eingegangen.

Figur 7 zeigt einen Teil eines Gebäudes 9 mit drei ortsfesten Kameras 9-1, 9-2, 9-3. Die Kameras 9-1, 9-2, 9-3 haben ein Blickfeld 9', in dem sich jeweils auf eine zu verifizierende Struktur 6-1, 6-2, 6-3 befindet. Die Kameras 9-1, 9-2, 9-3 können beispielsweise über ein kabelgebundenes oder drahtloses Netzwerk mit einer gemeinsamen Recheneinheit 8 verbunden sein, wobei auch jede der Kameras 9-1, 9-2, 9-3 eine eigene Recheneinheit 8 aufweisen könnte, in denen der Plan 7 jeweils gesondert hinterlegt ist bzw. wird.

Um die erste Struktur 6-1 zu verifizieren, wird der Identifikationsmaßstab 11 im Schritt S3 derart an eine erste Orientierungsstelle N0 gelegt und an dieser ausgerichtet, dass der Identifikationsmaßstab 11 im Blickfeld 9` der ersten Kamera 9-1 liegt, in dem sich auch die erste Struktur 6-1 befindet. Nun werden die oben erläuterten Schritte S4-S7 durchgeführt, d.h. der Recheneinheit 8 wird angezeigt, wo sich der Identifikationsmaßstab 11 befindet, der Identifikationsmaßstab 11 wird in den Plan 7 eingetragen, ein Bild 10 wird aufgenommen, die Korrelation wird durchgeführt und es kann überprüft werden, ob die zu verifizierende Struktur 6-1 im Plan 7 mit der zu verifizierenden Struktur 6-1 im mit dem Plan 7 korrelierten Bild 10 übereinstimmt.

Danach soll die zweite Struktur 6-2 verifiziert werden. Es ist jedoch nicht möglich, dass dies mit derselben Kamera 9-1 bzw. der vormaligen Position des Identifikationsmaßstabs 11 funktionieren würde. Um daher die zweite Struktur 6-2 zu verifizieren, wird das Verfahren ab Schritt S3 wiederholt, und der Identifikationsmaßstab 11 wird derart an eine Orientierungsstelle N0 gelegt und ausgerichtet, dass der Identifikationsmaßstab 11 im Blickfeld 9` der zweiten Kamera 9-2 liegt, in dem sich auch die zweite Struktur 6-2 befindet. In anderen Worten wird der Identifikationsmaßstab 11 von einer Stelle zur nächsten verbracht bzw. neu ausgerichtet. Im Beispiel von Figur 7 ist die Orientierungsstelle N0 zufällig dieselbe, aber die Ausrichtung des Identifikationsmaßstabes 11 verändert sich. Im Allgemeinen wird im Schritt S3 somit die Orientierungsstelle N0 und/oder die Ausrichtung des Identifikationsmaßstabes 11 verändert. Danach können die Schritte S4-S7 des Hinterlegens, Aufzeichnens, Korrelierens und Überprüfens wiederholt werden, um auch die zweite Struktur 6-2 zu verifizieren.

Dasselbe Schema kann für weitere Strukturen 6-3 wiederholt werden, indem der Identifikationsmaßstab 11 an einer neuen Orientierungsstelle N0 positioniert und ausgerichtet wird (zur Orientierungsstelle N0 bei der dritten zu verifizierenden Struktur 6-3 sei angemerkt, dass diese nicht neben einer Seitenwand, aber z.B. in einer Fensterausnehmung liegt). Dieses Verfahren ist insbesondere dann vorteilhaft, wenn sich bereits ein Netzwerk aus Kameras 9-1, 9-2, 9-3 im Gebäude 1 befindet.

Figur 8 zeigt eine Variante, bei welcher keine ortsfesten Kameras 9 eingesetzt werden, sondern eine einzige mobile Kamera 9. In diesem Fall kann die Recheneinheit 8 optional auch mit der mobilen Kamera 9 mitgeführt werden, wenn diese z.B. als mobiler Computer 15' zusammengefasst sind, der gegebenenfalls auch einen Bildschirm 15 umfassen kann. In anderen Varianten kann die mobile Kamera 9 die von ihr aufgenommenen Bilder 10 jedoch auch an eine entfernte ortsfeste Recheneinheit 8 senden.

Der Benutzer des Systems aus Figur 4 benötigt zum Verifizieren der Strukturen 6-1, 6-2, 6-3 zwei voneinander gesonderte mobile Komponenten, nämlich einmal die Kamera 9 bzw. den mobilen Computer 15' und einmal den mobilen Identifikationsmaßstab 11. Der Benutzer platziert den Identifikationsmaßstab 11 an einer Orientierungsstelle N0, die sich in der Nähe der ersten zu verifizierenden Struktur 6-1 befindet und positioniert die Kamera 9 derart, dass deren Blickfeld 9` sowohl die zu verifizierende Struktur 6 als auch den Identifikationsmaßstab 11 umfasst. Nun werden die oben erläuterten Schritte durchgeführt, d.h. der Recheneinheit 8 wird angezeigt, wo sich der Identifikationsmaßstab 11 befindet, der Identifikationsmaßstab 11 wird in den Plan 7 eingetragen, ein Bild 10 wird aufgenommen, die Korrelation wird durchgeführt und es kann überprüft werden, ob die zu verifizierende Struktur 6-1 im Plan 7 mit der zu verifizierenden Struktur 6-1 im mit dem Plan 7 korrelierten Bild 10 übereinstimmt.

Um nun die zweite Struktur 6-2 zu verifizieren, wird der Identifikationsmaßstab 11 im Schritt S3 an einer neuen Orientierungsstelle N0 positioniert und/oder neu ausgerichtet. Die Kamera 9 wird nun in einem Schritt S3' derart positioniert, dass deren Blickfeld 9` sowohl die zu verifizierende Struktur 6-2 als auch den Identifikationsmaßstab 11 umfasst. Gegebenenfalls, so wie in Figur 8 theoretisch möglich wäre, könnte der Identifikationsmaßstab 11 auch an derselben Orientierungsstelle N0 mit derselben Ausrichtung verbleiben und die Kamera 9 wird neu positioniert, sodass deren Blickfeld 9` sowohl die zu verifizierende Struktur 6-2 als auch den Identifikationsmaßstab 11 umfasst. Die bereits erläuterten Schritte S4-S7 können wiederholt werden, um zu überprüfen, ob die zu verifizierende Struktur 6-2 im Plan 7 mit der zu verifizierenden Struktur 6-2 im mit dem Plan 7 korrelierten Bild 10 übereinstimmt.

Hinsichtlich Figur 8 sei jedoch festgehalten, dass die Kamera 9 auch einen IMU-Sensor (inertiale Messeinheit) oder andere Mittel zur Bewegungsverfolgung der Kamera 9 umfassen könnte, der Messdaten liefert, um die Bewegung der Kamera 9 nachzuverfolgen. In diesem Fall müsste der Identifikationsmaßstab 11 auch nicht umplatziert werden, sondern nachdem eine erste Korrelation stattgefunden hat, können weitere Korrelationen für weitere Bilder errechnet werden, indem die erfolgte Korrelation des Planes einer Koordinatentransformation unterworfen wird, die auf die Messdaten des IMU-Sensors zurückgehen. In Figur 8 könnte z.B. an der ersten Stelle der Kamera 9 ein erstes Bild 10 aufgenommen werden, aus dem der Identifikationsmaßstab 11 ersichtlich ist, und hier die Korrelation durchgeführt werden. Dann wird die Kamera 9 zur zweiten Stelle bewegt, um dort ein Bild der zweiten Struktur 6-2 aufzunehmen, und das dort aufgezeichnete weitere Bild wird mit dem Plan 7 korreliert, indem man die Korrelation des ersten Bildes 10 heranzieht und die Bewegung der Kamer auf diese Korrelation anwendet, sodass der Plan 7 über das weitere Bild gelegt werden kann, in dem die zweite Struktur 6-2, aber nicht der Identifikationsmaßstab 11 ersichtlich ist.

Bezüglich der Figuren 7 und 8 sei weiters angemerkt, dass ein oder mehrere Identifikationsmaßstäbe 11 eingesetzt werden können, d.h. entweder nimmt der Benutzer den Identifikationsmaßstab 11 mit und positioniert diesen neu oder er lässt den ersten Identifikationsmaßstab 11 liegen (oder entfernt diesen) und platziert einen anderen Identifikationsmaßstab 11 in der Nähe der zweiten Struktur 6-2.

Insbesondere aus den Figuren 7 und 8 ist ersichtlich, dass der Plan 7 um ein Vielfaches größer sein kann als das Blickfeld 9` einer einzigen Kamera 9, z.B. wenn der Plan 7 ein ganzes Gebäude 1 darstellt. Wenn der Plan 7 eine Sammlung von zweidimensionalen Plänen ist, werden in der Regel keine weiteren Daten benötigt. Insbesondere wenn der Plan ein dreidimensionaler Plan ist, ist hinzutretend bevorzugt, wenn die Kamera 9 weiters eine Neigung, welche die Kamera 9 zum Zeitpunkt der Aufzeichnung des Bildes 10 aufweist, an die Recheneinheit 8 sendet, wobei die Recheneinheit 8 die Neigung im Schritt des Korrelierens mitberücksichtigt. Die Neigung einer ortsfesten Kamera 9 kann vorab bekannt sein und unmittelbar in der Recheneinheit 8 hinterlegt sein. Wenn die Kamera 9 jedoch eine mobile Kamera ist, wird die Neigung üblicherweise über einen Neigungssensor (der z.B. Teil eines IMU-Sensors ist, der üblicherweise bereits in einem Tablet oder Mobiltelefon verbaut ist) ermittelt und an die Recheneinheit 8 gesendet, z.B. als Metadaten zusammen mit dem Bild 10. Die Neigungsdaten werden üblicherweise dazu herangezogen, um eine Verzerrung in z-Richtung zu bestimmen, da die x-Richtung und die y-Richtung bereits durch den Identifikationsmaßstab 11 vorgegeben werden.

In Bezug auf Figur 9 wird nun auf mögliche Varianten des Identifikationsmaßstabs 11 eingegangen. Üblicherweise ist der Identifikationsmaßstab 11 ein flächiges Element mit zwei in einem rechten Winkel zueinanderstehenden Längsseiten L1, L2 einer vorbestimmten Länge, wobei sich die Längen der Längsseiten L1, L2 auch unterscheiden können. Die Längsseiten L1, L2 treffen an einem Schnittpunkt L0 aufeinander, wobei der Schnittpunkt L0 an die genannte Orientierungsstelle N0 gelegt wird und die Längsseiten L1, L2 wie gewünscht ausgerichtet werden können. "Flächig" bedeutet hierin, dass die Dicke des Identifikationsmaßstabs 11 wesentlich kleiner ist, z.B. mindestens um einen Faktor 10 oder 100, als die kürzere der Längsseiten L1, L2. Dadurch können die Längsseiten L1, L2 und der flächige Körper des Identifikationsmaßstabs 11 an übliche Stellen gelegt werden, die in der Regel als Orientierungsstelle N0 dienen, insbesondere in Raumecken, da diese jedenfalls in Plänen 7 dargestellt sind. Bei einem derartigen Identifikationsmaßstab 11 können dessen Längen vorab in der Recheneinheit 8 als Referenzlängen hinterlegt werden. Alternativ könnte auch ein "unbekannter" Identifikationsmaßstab 11 herangezogen werden und dessen Längen manuell in die Recheneinheit 8 eingegeben werden. Die bevorzugte Länge der Längsseiten L1, L2 liegt zwischen 10 cm und 100 cm, besonders bevorzugt zwischen 15 cm und 70 cm oder zwischen 15 cm und 50 cm.

Wie dargestellt bietet sich für den Identifikationsmaßstab 11 insbesondere ein L-förmiger Körper an, wobei die Außenseiten der zwei Arme des L-förmigen Körpers die genannten Längsseiten L1, L2 bilden. Ein derartiger L-förmiger Körper kann gut gehandhabt und daher auch leicht umplatziert werden. Bevorzugt ist die der ersten Längsseite L1 gegenüberliegende und an die zweite Längsseite L2 anschließende dritte Längsseite L3 visuell gut ersichtlich, da dies der Recheneinheit 8 beim Erkennen des Identifikationsmaßstabs 11 im Bild 10 hilft. Gleiches gilt für die vierte Längsseite L4, welche der zweiten Längsseite L2 gegenüberliegt und an die erste Längsseite L1 anschließt. Zumindest die dritte und vierte Längsseite L3, L4, und/oder auch die erste und zweite Längsseite L1, L2, können z.B. mit einer Identifikationsfarbe wie Rot, Grün, Gelb oder Orange hervorgehoben werden, da sich diese Farben in der Regel besonders gut visuell von der Farbe Grau abheben, welche das Gebäude 1 bzw. der Untergrund der Strukturen 6 üblicherweise aufweisen. Besonders bevorzugt ist der gesamte Körper des Identifikationsmaßstabs 11, bzw. zumindest eine oder beide der flächigen Seiten, in einer Identifikationsfarbe wie Rot, Grün, Gelb oder Orange ausgestaltet, um den Identifikationsmaßstabs 11 im Bild visuell hervorzuheben.

Die genannten Varianten sind jedoch auch möglich, wenn der Identifikationsmaßstab 11 einen flächigen rechteckigen, dreieckigen oder anders geformten Körper mit zwei normal zueinanderstehenden Längsseiten L1, L2 aufweist. Der Identifikationsmaßstab 11 könnte auch auf einem anderen mobilen Element wie einem Schalbrett oder dergleichen aufgedruckt, aufgeklebt oder anders aufgebracht sein. Weiters könnte der Identifikationsmaßstab 11 aber auch auf einem Türrahmen oder dergleichen aufgedruckt sein, sodass er nach dem Platzieren des Türrahmens nicht mehr mobil ist.

Aus Figur 9 ist weiters ersichtlich, dass der Identifikationsmaßstab 11 Identifikationsmarker 16 aufweisen kann. Die Identifikationsmarker 16 sind beispielsweise wie dargestellt QR-Codes. Jedoch könnten die Identifikationsmarker 16 auch andere visuell gut ersichtliche Symbole wie Buchstaben oder Nummern sein. QR-Codes sind jedoch bevorzugt, da diese aus dem Bild 10 besonders gut erkennbar sind. Jeder Identifikationsmarker 16 kann eine Information beinhalten, z.B. einen Abstand zum Schnittpunkt L0 und/oder einen Abstand zu einer oder beider der Längsseiten L1, L2. Die Information könnte jedoch auch sein, dass sich der jeweilige Identifikationsmarker 16 unmittelbar neben der Längsseite L1 oder neben der Längsseite L2 befindet.

Die Identifikationsmarker 16 sind zudem besonders bevorzugt flächig ausgestaltet, z.B. rechteckig, dreieckig, rund oder dergleichen und gegebenenfalls mit zwei, drei oder mehr Längsseiten L1', L2` vorbekannter Länge. Diese flächige Form kann der Recheneinheit 8 vorbekannt sein, sodass daraus eine perspektivische Verzerrung ermittelbar ist, was beim Schritt des Korrelierens besonders bevorzugt ist und die Genauigkeit des Verfahrens erhöhen kann.

Die Figuren 11 und 12 zeigen eine Anordnung, bei dem die Vorteile des Identifikationsmaßstabs 11 mit inhomogenen (d.h. nicht einfärbigen) Identifikationsmarkern 16 besonders zu tragen kommen. Hierbei nimmt die Kamera 9 ein Bild 10 in Draufsicht auf, d.h. im Wesentlichen von oben. Der Identifikationsmaßstab 11 liegt flächig am Boden 2 auf (diese Variante der Erfindung ist jedoch nicht auf die konkrete Anordnung z.B. am Boden 2 beschränkt). Am Boden 2 befindet sich jedoch eine Leiste 17 (z.B. eine Schalung), sodass der Identifikationsmaßstab 11 an sich nicht am freien Raum unter der Leiste 17 orientiert werden könnte. Der flächige Körper des Identifikationsmaßstabs 11 ermöglicht jedoch, dass dieser unter die Leiste geschoben werden kann. Die Recheneinheit 8 kann nun aus der unvollständigen Darstellung des Identifikationsmaßstabs 11 errechnen, wo sich die Leiste 17 und gegebenenfalls auch die Wand 3 befindet (z.B., wenn der Abstand der Wand 3 zur Leiste 17 bekannt ist). Wenn die Recheneinheit 8 somit vorab weitere Informationen über die Erscheinungsform des Identifikationsmaßstabs 11 hat, und z.B. dessen Form oder dessen Anordnung der Identifikationsmarker 16 kennt, kann die Recheneinheit 8 bei einer unvollständigen Ansicht des Identifikationsmaßstabs 11 im Bild die ersichtliche Länge des Identifikationsmaßstabs 11 ermitteln und auch nur diese Länge im Plan 7 eintragen. Wenn beispielsweise wie in Figur 11 gezeigt genau die Hälfte der QR-Marker einer Seite ersichtlich sind, kann die Recheneinheit 8 eine effektive Referenzlänge des Identifikationsmaßstabs 11 ermitteln und diese danach beim Einzeichnen des Identifikationsmaßstabes 11 in den Plan 7 heranzeihen. Wenn der Recheneinheit 8 z.B. bekannt ist, dass die erste Längsseite L1 des Identifikationsmaßstabs 11 eine Länge von 30 cm aufweist, aber nur die Hälfte der QR-Marker entlang der zweiten Seite ersichtlich ist, kann die Recheneinheit 8 die effektive Länge z.B. um 3 cm reduzieren und eine effektive Referenzlänge des Identifikationsmaßstabs 11 von 27 cm in den Plan einzeichnen. Als Orientierungsstelle N0 wird hierbei der fiktive Schnittpunkt der Außenseite der Leiste 17 mit der Wand 3 und dem Boden 2 angesehen.

Bei der obigen Variante sind QR-Codes als Identifikationsmarker 16 natürlich vorteilhaft, aber es kann verallgemeinert werden, dass Identifikationsmarker 16 oder zumindest der Identifikationsmaßstab 11 bevorzugt inhomogen strukturiert sind, d.h. derart ausgestaltet sind, dass ein Abdecken des Identifikationsmaßstabs 11 optisch erkennbar gemacht wird. Die Identifikationsmarker 16 könnten beispielsweise auch ein Wellenmuster mit bekannter Periodizität sein (wenn der Identifikationsmaßstab 11 somit z.B. zehn Wellen abbildet, aber nur neun ersichtlich sind, kann auf ein Abdecken geschlossen werden) oder schlichtweg numerische Zahlenangaben, wobei flächige Identifikationsmarker 16 aufgrund der optischen Erkennbarkeit bevorzugt sind. Nur zur Vollständigkeit sei erwähnt, dass es mit einem Identifikationsmaßstab 11 mit homogener Oberfläche nicht oder nur schwer möglich wäre, ein Abdecken des Identifikationsmaßstabs 11 wie in der Situation der Figuren 10 und 11 zu erkennen, sodass die Recheneinheit 8 eine falsche Länge des Identifikationsmaßstabs 11 im Plan 7 hinterlegen würde.

Zusammengefasst hat der Identifikationsmaßstab 11 eine zweidimensionale Erscheinungsform, die aus dem aufgezeichneten Bild 10 ersichtlich ist. Die Erscheinungsform hat eine vorbestimmte Größe, die in der Recheneinheit 9 hinterlegt ist, sodass, nachdem der Recheneinheit 9 die Position und Ausrichtung des Identifikationsmaßstabes 11 bekanntgemacht wurde, die genannte Korrelation durchgeführt werden kann. Es sei abermals hervorgehoben, dass es sich nicht um eine punktuelle Korrelation, sondern auch um eine zweidimensionale Korrelation handelt, da der Plan 7 auch über die Größe des Identifikationsmaßstabes 11 mit dem Bild in zwei Dimensionen verknüpft wird.

In Figur 9 ist dargestellt, dass die optische Erscheinungsform des Identifikationsmaßstabs 11 mit dessen Außenkontur übereinstimmt, sodass die Größe der Erscheinungsform auch der Größe des Identifikationsmaßstabes 11 entspricht Es könnte aber auch vorgesehen werden, dass eine optische Erscheinungsform vorbestimmter Größe auf ein Brett oder dergleichen aufgedruckt ist, sodass die Außenkontur des Brettes nicht mit der Erscheinungsform der aufgedruckten Information übereinstimmt. Dies ist jedoch von der Erfindung mitumfasst, da lediglich die Erscheinungsform (z.B., dass eine L-Form vorliegen soll) und die zugehörige Größe des "Aufdrucks" bekannt sein muss. Es kann die Größe des Identifikationsmaßstabes und/oder die Größe der Erscheinungsform in der Recheneinheit 9 hinterlegt werden. Gegebenenfalls kann ein Abstand des Aufdrucks zu Eckpunkten des Bretts oder dergleichen bekannt sein, sodass der Recheneinheit 9 auch bekanntgemacht werden kann, dass die optisch ersichtliche Erscheinungsform in x-Richtung und y-Richtung z.B. jeweils 10 cm von einer Raumecke entfernt ist, da dies die Position des Aufdrucks auf dem Brett ist. Dies erlaubt eine eindeutige Definition der Orientierungsstelle N0.

In den oben beschriebenen Verfahren wurde jeweils eine bereits hergestellte Struktur 6 verifiziert, d.h. eine tatsächlich vorhandene Struktur wurde mit Plandaten abgeglichen. Dieses Verfahren kann jedoch auch abgewandelt werden, indem Plandaten dazu eingesetzt werden, um eine Struktur 6 herzustellen. Anstatt des letztgenannten Schrittes des Überprüfens wird die Korrelation dazu eingesetzt, um Informationen aus dem Plan auf die tatsächliche Umgebung zu übertragen. In diesem Fall wird das aufgezeichnete Bild 10 die Struktur 6 nicht enthalten, sondern den Bereich, in dem die Information angezeigt werden soll, auf Grundlage derer die Struktur 6 später hergestellt werden soll.

Das Verfahren der Übertragung von Informationen vom Plan 7 auf die Umgebung wird dazu eingesetzt, um etwas anzeichnen oder markieren oder auch die Position eines Werkzeuges (z.B. Bohrer, Lackierdüse, 3-D Drucker, etc.) anzuleiten, zu bestimmen und/oder zu korrigieren. Hierfür können die oben beschriebenen Verfahren, insbesondere auch das in Figur 1 dargestellte Projektionsverfahren, eingesetzt werden. Beim Verfahren von Figur 1 würden die Elemente 5, 5' noch nicht vorhanden sein, aber aus der Korrelation könnte wieder die Projektionsdarstellung 13 ermittelt werden, um dem Benutzer genau anzuzeigen, wo ein bestimmtes Element hergestellt werden muss (oder wo eine Gefahrenzone wie eine Gasleitung besteht und gerade nicht montiert werden darf).

Auch das Verfahren mit Bildschirm 15 könnte eingesetzt werden, wo das aufgenommene Bild 10 mit dem Plan 7 überlagert wird, sodass der Benutzer genau weiß, wo montiert werden soll. In einem Beispiel könnte der Benutzer den Bohrer an die Wand ansetzen, und am Bildschirm ist in Echtzeit ersichtlich, ob der Bohrer an der korrekten Stelle ansetzt. Diese Position könnte korrigiert werden, bis die Position des Bohrers am Bildschirm 15 mit der Bohrposition im Plan 7 übereinstimmt.

Im Übrigen sind alle oben beschriebenen Varianten des Verfahrens zum Verifizieren einer Struktur 6 auf das Verfahren zum Übertragen von Informationen aus dem Plan 7 auf die Umgebung anwendbar.

Es sei hervorgehoben, dass die Verfahren zum Übertragen einer Information auf die Umgebung und zum Verifizieren der Struktur auch kombiniert werden könnten, z.B. indem zuerst das Verfahren zum Übertragen einer Information auf die Umgebung durchgeführt wird, um eine Struktur herzustellen, wobei das Verfahren zum Verifizieren der Struktur durchgeführt wird, nachdem diese gemäß dem ersten Verfahren hergestellt wurde.

Es versteht sich, dass die hierin genannten Recheneinheiten und Auswerteeinheiten nicht physisch in einer Einheit verwirklicht sein müssen, wobei diese jedoch auch nicht ausgeschlossen ist. Beispielsweise könnte die genannte Recheneinheit 9 in mehrere Teile aufgeteilt sein, wobei eine erste Unter-Recheneinheit, welche die Kameras 9 verwaltet, eine zweite Unter-Recheneinheit, welche den Plan 7 verwaltet und eine dritte Unter-Recheneinheit, welche die Korrelation ausführt. Die Unter-Recheneinheiten und die anderen Komponenten wie die Kameras 9 könnten z.B. über ein Netzwerk kommunizieren. Es sind auch andere verteilte Systemarchitekturen möglich.

## Patentansprüche

1. Verfahren zum Korrelieren eines digitalen Plans (7) mit einer tatsächlichen Umgebung, wobei das Verfahren mittels einer Recheneinheit (8) und einer an die Recheneinheit (8) angeschlossenen Kamera (9) durchgeführt wird, **dadurch gekennzeichnet, dass** das Verfahren die folgenden Schritte umfasst:
- mittels der Recheneinheit (8), Empfangen oder Abrufen des Plans (7), wobei der Plan (7) eine Darstellung der Umgebung umfasst,
- Bereitstellen eines bevorzugt mobilen Identifikationsmaßstabes (11) mit einer zweidimensionalen optischen Erscheinungsform einer vorbestimmten Größe, wobei die Erscheinungsform und die Größe in der Recheneinheit (8) hinterlegt sind,
- Platzieren des Identifikationsmaßstabes (11) an einer Orientierungsstelle (N0) mit einer ausgewählten Ausrichtung,
- Hinterlegen der Position der Orientierungsstelle (N0) und der Ausrichtung des Identifikationsmaßstabes (11) an der Orientierungsstelle (N0) in der Recheneinheit (8), um eine Darstellung des Identifikationsmaßstabes (11) im Plan einzuzeichnen,
- mittels der Kamera (9), Aufzeichnen zumindest eines Bildes (10), welches zumindest einen Teil der Umgebung und den in der Umgebung befindlichen Identifikationsmaßstab (11) enthält,
- mittels der Recheneinheit (8), Korrelieren des Planes (7) mit dem aufgezeichneten Bild (10), indem die Darstellung des Identifikationsmaßstabes (11) im Plan (7) mit der im Bild (10) ersichtlichen Erscheinungsform des Identifikationsmaßstabs (11) verknüpft wird.

2. Verfahren nach Anspruch 1, wobei der Identifikationsmaßstab (11) einen flächigen Körper mit zwei bevorzugt in einem rechten Winkel zueinanderstehenden Längsseiten (L1, L2) einer vorbestimmten Länge aufweist, wobei die Längen beim Einzeichnen der Darstellung des Identifikationsmaßstabes (11) im Plan (7) ausgehend von der Orientierungsstelle (N0) als Referenzlängen eingezeichnet werden, und wobei beim Korrelieren des Planes (7) mit dem Bild (10) die im Bild (10) ersichtlichen Längsseiten (L1, L2) mit den im Plan (7) dargestellten Referenzlängen überlagert wird.

3. Verfahren nach Anspruch 2, wobei der Identifikationsmaßstab (11) derart an der zu verifizierenden Struktur (6) platziert wird, dass der Identifikationsmaßstab (11) flächig an einen Untergrund gelegt wird und die beiden Längsseiten (L1, L2) an zwei normal zueinanderstehenden Flächen angelegt werden, wobei der Untergrund und die Flächen bevorzugt im Plan (7) dargestellt sind.

4. Verfahren nach einem der vorhergehenden Ansprüche, wobei der Identifikationsmaßstab (11) zumindest einen Identifikationsmarker (16) wie einen QR-Code aufweist, welcher der Oberfläche des Identifikationsmaßstabes eine inhomogene Ausgestaltung verleiht,, wobei die Recheneinheit (8) bevorzugt die inhomogene Ausgestaltung des Identifikationsmaßstabes aus dem Bild ausliest, diese mit einer vorab hinterlegten inhomogenen Ausgestaltung des Identifikationsmaßstabes (16) vergleicht und daraus eine neue Referenzlänge des Identifikationsmaßstabes (11) errechnet, um diese beim Einzeichnen der Darstellung des Identifikationsmaßstabes (11) im Plan (7) heranzieht.

5. Verfahren nach einem der vorhergehenden Ansprüche, wobei der Plan (7) ein dreidimensionaler Plan ist und die Kamera (9) weiters eine Neigung, welche die Kamera (9) zum Zeitpunkt der Aufzeichnung des Bildes (10) aufweist, an die Recheneinheit (8) sendet, wobei die Recheneinheit (8) die Neigung im Schritt des Korrelierens mitberücksichtigt.

6. Verfahren nach einem der vorhergehenden Ansprüche, wobei die Kamera (9) Mittel zur Bewegungsverfolgung, bevorzugt eine inertiale Messeinheit oder eine optische Auswerteeinheit, umfasst und nach dem Korrelieren des Planes (7) mit dem Bild (10) bewegt wird, wobei weitere Bilder, die nach dem erstgenannten Bild (10) aufgenommen wurden, auch mit dem Plan (7) korreliert werden, indem eine Koordinatentransformation auf den zuvor korrelierten Plan (7) angewandt wird, wobei die Koordinatentransformation auf Basis der von den Mitteln zur Bewegungsverfolgung gelieferten Bewegungswerte errechnet wird.

7. Verfahren nach einem der vorhergehenden Ansprüche, wobei die Kamera (9) und die Recheneinheit (8) in einem tragbaren Computer (15`), bevorzugt einem Tablet, verwirklicht sind, wobei der tragbare Computer (15`) bevorzugt einen Bildschirm (15) zur Darstellung des mit dem Plan (7) überlagerten Bildes (10) aufweist.

8. Verfahren nach einem der vorhergehenden Ansprüche zum Verifizieren einer Struktur (6), insbesondere einer Gebäudestruktur oder Montagestruktur, wobei der Plan (7) eine Darstellung der zu verifizierenden Struktur (6) umfasst, wobei das aufgezeichnete Bild (10) oder ein danach aufgezeichnetes, mit dem Plan (7) korreliertes weiteres Bild die in der tatsächlichen Umgebung vorhandene zu verifizierende Struktur (6) umfasst, wobei das Verfahren den folgenden zusätzlichen Schritt umfasst:
- Überprüfen, ob die zu verifizierende Struktur (6) im Plan (7) mit der zu verifizierenden Struktur (6) im mit dem Plan (7) korrelierten Bild (10) übereinstimmt.

9. Verfahren nach Anspruch 8, wobei die Recheneinheit (8) eine aus dem Bild (10) ermittelte Ist-Position der zu verifizierenden Struktur (6) mit einer im Plan (7) dargestellten Soll-Position der zu verifizierenden Struktur (6) vergleicht, und ein Ergebnis des Vergleichs ausgibt.

10. Verfahren nach Anspruch 8 oder 9, wobei die Recheneinheit (8) aus der Korrelation des Planes (7) mit dem Bild (10) eine Projektionsdarstellung (13) zumindest eines Teils des Planes (7), insbesondere der zu verifizierenden Struktur (6), ermittelt und die Projektionsdarstellung (13) mittels eines Projektors (14) auf eine Soll-Position der zu verifizierenden Struktur (6) projiziert, wobei die Kamera (9) bevorzugt zumindest ein weiteres Bild aufnimmt, das die zu verifizierende Struktur (6) und die darauf projizierte Projektionsdarstellung (13) enthält und wobei die Recheneinheit (8) weiters bevorzugt eine aus dem weiteren Bild ersichtliche Ist-Position der zu verifizierenden Struktur (6) mit der Projektionsdarstellung (13) der zu verifizierenden Struktur (6) vergleicht, und ein Ergebnis des Vergleichs ausgibt.

11. Verfahren nach einem der Ansprüche 8 bis 10, wobei der Plan (7) und das Bild (10) gleichzeitig und überlagert auf einem Bildschirm (15) dargestellt werden, und der Plan (7) oder Teile des Plans (7) bevorzug als Augmented-Reality-Darstellung dargestellt werden.

12. Verfahren nach einem der Ansprüche 8 bis 11, wobei zum Verifizieren einer zweiten Struktur (6-2) die Schritte Platzieren, Übermitteln, Aufzeichnen, Korrelieren und Überprüfen wiederholt werden, wobei der Identifikationsmaßstab (11) oder ein anderer Identifikationsmaßstab (11) beim Schritt des Platzierens neu ausgerichtet und/oder an eine zweite Orientierungsstelle gelegt wird, die von der erstgenannten Orientierungsstelle (N0) abweicht, wobei bevorzugt die zweite Struktur (6-2) und die zweite Orientierungsstelle im ersten aufgezeichneten Bild (10) nicht ersichtlich sind und die Kamera (9) für die Wiederholung der Schritte derart bewegt wird, dass der an der zweiten Orientierungsstelle befindliche Identifikationsmaßstab (11) in den bei der Wiederholung aufgezeichneten Bildern (10) ersichtlich ist.

13. Verfahren nach einem der vorhergehenden Ansprüche zum Übertagen einer Information auf die Umgebung, insbesondere einer Werkzeugposition oder Montageposition, wobei der Plan (7) eine Darstellung der zu übertragenden Information umfasst, wobei das aufgezeichnete Bild (10) oder ein danach aufgezeichnetes, mit dem Plan (7) korreliertes weiteres Bild einen erwarteten Bereich der zu übertragenden Information umfasst, wobei das Verfahren den folgenden zusätzlichen Schritt umfasst:
- Übertragen der im Plan (7) dargestellten Information auf die Umgebung gemäß des mit dem Plan (7) korrelierten Bilds (10).

14. Verfahren nach Anspruch 13, wobei die Recheneinheit (8) aus der Korrelation des Planes (7) mit dem Bild (10) eine Projektionsdarstellung (13) zumindest eines Teils des Planes (7), insbesondere der zu übertragenden Information, ermittelt und die Projektionsdarstellung (13) mittels eines Projektors (14) auf die tatsächliche Umgebung projiziert.

15. Verfahren nach Anspruch 13 oder 14, wobei der Plan (7) und das Bild (10) gleichzeitig und überlagert auf einem Bildschirm (15) dargestellt werden, und der Plan (7) oder Teile des Plans (7) bevorzug als Augmented-Reality-Darstellung dargestellt werden.
